# EUROPEAN PATENT APPLICATION

(11) **EP 4 628 713 A1**
(43) Date of publication of application: **08.10.2025**
(21) Application number: 24909202.4
(22) Date of filing: 27.12.2024
(51) Int. Cl.: F01N 3/28, C04B 38/06, C04B 38/00, C04B 35/64, B01D 46/00, B01D 46/24, B01D 53/94, B01J 32/00, B01D 53/72, B01D 53/62, B01D 53/56, C04B 35/565

(54) **CERAMIC UNIT, HONEYCOMB CERAMIC CARRIER AND PREPARATION METHOD THEREFOR, AND EXHAUST GAS CATALYTIC CORE**

(30) Priority: 24.09.2024 CN 202411341241
(71) Applicant: Shandong Sinocera Functional Material Co., Ltd., Dongying, Shandong 257100 (CN)
(72) Inventor: SHU, Linxiang, Dongying, Shandong 257100 (CN); WANG, Xiaojie, Dongying, Shandong 257100 (CN); CUI, Mingshan, Dongying, Shandong 257100 (CN); GAO, Chunxiao, Dongying, Shandong 257100 (CN); LV, Yuxing, Dongying, Shandong 257100 (CN); HUO, Xiyun, Dongying, Shandong 257100 (CN); YANG, Jun, Dongying, Shandong 257100 (CN); SHEN, Liang, Dongying, Shandong 257100 (CN); ZHAO, Xihui, Dongying, Shandong 257100 (CN)
(74) Representative: VKK Patentanwälte PartG mbB
(86) International application number: PCT/CN2024/143045
(87) International publication number: WO 2025/140503

(57) **Abstract**

The present invention provides a ceramic unit body, a honeycomb ceramic carrier and a preparation method therefor, and an exhaust catalytic substrate core, wherein two ends of the ceramic unit body define a gas inlet end and a gas outlet end, respectively, and the ceramic unit body has a plurality of compartments separated by partition walls and extending in a longitudinal direction of the ceramic unit body; the compartments comprise first compartments and second compartments alternately arranged in a cross section in the ceramic unit body, the first compartments being open on a gas inlet end side and blocked on a gas outlet end side, and the second compartments being blocked on a gas inlet end side and open on a gas outlet end side; wherein the partition walls are provided with a plurality of pores connecting the first compartments and the second compartments; and an average pore diameter of openings of the pores on a first compartment side is Di, an average pore diameter of openings of the pores on a second compartment side is Do, and Di<Do. The ceramic unit body and honeycomb ceramic carrier provided by the present invention can improve exhaust gas purification efficiency.

## Description

### Technical field

The present invention relates to the field of honeycomb ceramic catalysis, and in particular to a ceramic unit body, a honeycomb ceramic carrier and a preparation method thereof, and an exhaust catalytic substrate core.

### Technical background

Pollutants emitted by diesel vehicles mainly include carbon monoxide (CO), hydrocarbons (HC), nitrogen oxides (NOx), particulate matter (also referred to as PM, which is composed of dry soot, liquid hydrocarbons and a small amount of sulfate), etc. Generally, in an exhaust gas purification device, a diesel oxidation catalyst (DOC), a diesel particulate filter (DPF), a reductant injector and a selective catalytic reduction (SCR) device are installed sequentially in the exhaust pipeline that discharges the exhaust gas. Exhaust gas generated by an engine is sequentially applied to the soot oxidation catalyst, the diesel soot filter and the selective catalytic reduction device. The harmful substances contained in the exhaust gas are removed. The DOC oxidizes the carbon monoxide and hydrocarbons contained in the exhaust gas into carbon dioxide, and the filter collects the particulate matter (PM) contained in the exhaust gas and selectively catalytically reduces it. The device uses a reductant or a nitrogen group injected from the reductant injector to adsorb nitrogen oxides contained in the exhaust gas. The diesel particulate filter (DPF) is generally coated with a catalyst, which has the function of oxidizing accumulated soot and oxidizing carbon monoxide and hydrocarbons. If the loading level of the catalyst in the filter is high enough, the function of an upstream soot oxidation catalyst can be integrated into the DPF.

Therefore, how to improve the conversion rate of exhaust gas and the capture efficiency of particles in the exhaust gas needs to be solved urgently.

### Summary

An object of the present invention is to provide a ceramic unit body, a honeycomb ceramic carrier and a preparation method thereof, and an exhaust catalytic substrate core, in which a soot oxidation catalyst and a DPF oxidation catalyst can simultaneously be applied, to improve the conversion rate of exhaust gas and the capture efficiency of particles in the exhaust gas.

To achieve the above object, the present invention provides the following technical solution:
A ceramic unit body, wherein two ends of the ceramic unit body in a longitudinal direction define a gas inlet end and a gas outlet end, respectively, and the ceramic unit body has a plurality of compartments separated by partition walls and extending in the longitudinal direction of the ceramic unit body;
the compartments comprise first compartments and second compartments alternately arranged in a cross section of the ceramic unit body, the first compartments being open on a gas inlet end side and blocked on a gas outlet end side, and the second compartments being blocked on a gas inlet end side and open on a gas outlet end side; and
wherein the partition walls are provided with a plurality of pores connecting the first compartments and the second compartments; an average pore diameter of openings of the pores on a first compartment side is Di, an average pore diameter of openings of the pores on a second compartment side is Do, and Di<Do.

In some embodiments of the present invention, in at least one of the pores, the number of openings on the first compartment side is at least two, and at least one of the openings on the first compartment side has a pore diameter less than that of the opening of the pore on the second compartment side;
and/or, in at least one of the pores, the number of openings on the second compartment side is at least two, and at least one of the openings on the second compartment side has a pore diameter greater than that of the opening of the pore on the first compartment side.

In some embodiments of the present invention, the average pore diameter Di of the pores on the first compartment side is in a range of [8, 20] micrometers, preferably, [12, 20] micrometers, which may be mathematically expressed as Di∈[8, 20] and Di∈[12, 20] in unit of micron;
and/or, the average pore diameter Do of the pores on the second compartment side is in a range of [11, 23] micrometers, preferably [15, 23] micrometers, which may be mathematically expressed as Do∈[11, 23] and Do∈[15, 23] in unit of micron.

In some embodiments of the present invention, both the first compartments and the second compartments have a square or rectangular cross section;
and/or, the first compartments and the second compartments are arranged alternately in a checkerboard pattern in the cross section of the ceramic unit body.

In some embodiments of the present invention, the partition walls have a thickness of 75 to 250 µm, preferably 125 to 200 µm;
and/or, the first compartments have a cross-sectional area greater than that of the second compartments, or the first compartments have a cross-sectional area less than that of the second compartments, or the first compartments have a cross-sectional area equal to that of the second compartments.

In some embodiments of the present invention, a distribution density of the pores on the partition wall, i.e., a porosity, is 35% to 55%;
and/or, the compartments in the ceramic unit body exhibit a cell density of 200 to 500 mesh.

To achieve the above object, the present invention further provides the following technical solution:
A method for preparing the ceramic unit body described above, the method comprising the following steps:
A1, dry-mixing silicon carbide powder, silicon powder, alkaline earth metal carbonate, metal oxide powder, an additive, a binder and a pore-forming agent to obtain a dry mixture;
A2, wet-mixing the dry mixture obtained in step A1 with water and a lubricant to obtain a wet mixture; and
A3, kneading, pugging, extruding, drying, plugging, debinding, and sintering the wet mixture obtained in step A2 to obtain the ceramic unit body;
wherein the sintering in the step A3 comprises oxygen-free sintering and oxidation sintering performed sequentially, and the oxidation sintering process is as follows: exposing a gas inlet end of a green body that has completed oxygen-free sintering to air, and performing negative pressure extraction on a gas outlet end of the green body, allowing the air to sequentially pass through the first compartments, the pores, the second compartments from the gas inlet end of the green body and then leave the green body from the gas outlet end, so as to form the pores in such a way that the average pore diameter Do of the openings of the pores on the second compartment side is greater than the average pore diameter Di of the opening of the pores on the first compartment side;
preferably, the dry mixing is performed using a plowshare high-speed mixer, with a dry mixing duration of 10 to 30 min, and a dry mixing speed of 50 to 200 rpm;
preferably, a wet mixing duration is 1 to 20 min, and a wet mixing speed is 50 to 200 rpm; and
preferably, kneading is performed using a biaxial kneading machine, with a kneading duration of 30 to 180 min.

In some embodiments of the present invention, in the step A1, a negative pressure used in the negative pressure extraction is (-0.05) to (-0.02) MPa.

In some embodiments of the present invention, in the step A1, the silicon carbide powder comprises first silicon carbide powder with an average particle size of 20 to 30 µm and second silicon carbide powder with an average particle size of 3 to 8 µm.

In some embodiments of the present invention, in the step A1, based on a total amount of the silicon carbide powder being 100 wt.%, the first silicon carbide powder accounts for 70 wt.% to 95 wt.% of the total silicon carbide powder, and the second silicon carbide powder accounts for 5 wt.% to 30 wt.% of the total silicon carbide powder.

In some embodiments of the present invention, in the step A1, based on a total mass of raw materials being 100 wt.%, the silicon carbide powder accounts for 50 wt.% to 75 wt.%, preferably 50 wt.% to 65 wt.%, the silicon powder accounts for 15 wt.% to 25 wt.%, preferably 15 wt.% to 20 wt.%, the alkaline earth metal carbonate accounts for 1 wt.% to 2 wt.%, the metal oxide powder accounts for 0.2 wt.% to 1 wt.%, the additive accounts for 0.5 wt.% to 1.5 wt.%, the binder accounts for 6 wt.% to 15 wt.%, the pore-forming agent accounts for 3 wt.% to 18 wt.%, and the lubricant accounts for 5 wt.% to 11 wt.%.

**In** some embodiments of the present invention, an average particle size of the silicon powder is 3 to 10 µm, an average particle size of the alkaline earth metal carbonate is 2 to 6 µm, an average particle size of the metal oxide is 3 to 8 µm, and an average particle size of the pore-forming agent is 8 to 40 µm.

**In** some embodiments of the present invention, the alkaline earth metal carbonate is selected from at least one of magnesium carbonate, strontium carbonate, barium carbonate and calcium carbonate.

**In** some embodiments of the present invention, the metal oxide is aluminum oxide.

In some embodiments of the present invention, the additive is selected from at least one of bentonite and kaolin.

In some embodiments of the present invention, the binder is selected from at least one of organic alcohols, potassium laurate, modified cellulose, polyethylene oxide, and polyvinyl pyrrolidone.

In some embodiments of the present invention, the pore-forming agent is selected from at least one of walnut powder, graphite, benzoic acid, starch, ammonium bicarbonate, ammonium chloride, polymethyl methacrylate, and expanded microspheres.

In some embodiments of the present invention, the lubricant is glycerin.

To achieve the above object, the present invention further provides the following technical solution:
A honeycomb ceramic carrier, wherein the honeycomb ceramic carrier is composed of the ceramic unit bodies described above or ceramic unit bodies prepared by the method described above, the ceramic unit bodies are distributed and connected in a cross section of the honeycomb ceramic carrier, and the ceramic unit bodies have the same longitudinal direction as the honeycomb ceramic carrier.

In some embodiments of the present invention, the honeycomb ceramic carrier has a thermal conductivity of 5 to 30 W/m•K, preferably 10 to 30 W/m•K, and more preferably 13 to 25 W/m•K.

In some embodiments of the present invention, the honeycomb ceramic carrier is a cylinder or a polygonal prism.

To achieve the above object, the present invention further provides the following technical solution:
A method for preparing the honeycomb ceramic carrier described above, characterized in that the method comprises the following steps:
B1, providing the ceramic unit bodies described above, or providing ceramic unit bodies prepared by the method described above; and
B2, the ceramic unit bodies being sequentially subjected to splicing, surface grinding, and end-face reinforcement treatments to obtain the honeycomb ceramic carrier.

To achieve the above object, the present invention further provides the following technical solution:
An exhaust catalytic substrate core, the exhaust catalytic substrate core comprising:
the honeycomb ceramic carrier described above, or a honeycomb ceramic carrier prepared by the method described above;
a first catalyst applied to inner wall surfaces of first compartments of the honeycomb ceramic carrier; and
a second catalyst applied to inner wall surfaces of second compartments of the honeycomb ceramic carrier.

In some embodiments of the present invention, the exhaust catalytic substrate core is configured for catalytically treating exhaust gas containing soot particles, the first catalyst is used to promote oxidation of the soot particles, and the second catalyst is used to catalyze conversion of carbon monoxide, hydrocarbons and nitrogen oxides.

Other applicable fields will become apparent from the description provided in the present disclosure.

The description and specific examples in the summary of the invention are intended for purposes of illustration only and are not intended to limit the scope of the present disclosure.

Compared with the prior art, the technical solutions provided by the present invention has the following beneficial effects:
The present invention provides a wall-flow honeycomb ceramic carrier capable of simultaneously loading a DOC oxidation catalyst (i.e., a soot oxidation catalyst) and a DPF oxidation catalyst, wherein the regeneration temperature equilibrium point after loading is lower, and the capture efficiency and exhaust gas conversion rate are similar to those of a DOC+DPF exhaust gas treatment system, while saving the volume and cost of a diesel vehicle emission system. Specifically, by controlling the cell density of the carrier and increasing the opening area on the outlet side of the carrier, the contact area between the catalyst and the reaction gas is increased, and both DOC and DPF catalysts can be coated simultaneously, and the exhaust gas conversion rate and particle capture efficiency are similar to those of a DOC+DPF exhaust system, thereby saving the volume and cost of a diesel vehicle exhaust gas emission system.

### Brief description of the drawings

In order to more clearly illustrate the technical solutions in the embodiments of the present invention, the drawings to be used in the embodiments will be briefly described below. Obviously, the drawings in the following description are some implementation solutions of the present invention, and others drawings can be obtained by those skilled in the art from these drawings without inventive effort.
Fig. 1 is a schematic diagram of the appearance of a honeycomb ceramic carrier provided in a first embodiment of the present invention, in which the cross-sectional area of a first compartment is greater than the cross-sectional area of a second compartment;
Fig. 2 is a schematic structural diagram of the honeycomb ceramic carrier in Fig. 1 at a first viewing angle;
Fig. 3 is a partial enlarged schematic diagram of region A in Fig. 2;
Fig. 4 is a schematic structural diagram of a honeycomb ceramic carrier provided in a second embodiment of the present invention at a second viewing angle, in which the cross-sectional area of a first compartment is equal to the cross-sectional area of a second compartment;
Fig. 5 is a partial enlarged schematic diagram of region B in Fig. 4;
Fig. 6 is a schematic diagram of a cross-sectional structure of the honeycomb ceramic carrier in Fig. 1 cut along its longitudinal direction;
Fig. 7 is a schematic cross-sectional view of a portion of pores on partition wall in Fig. 6;
Fig. 8 is a flowchart of a method for preparing a ceramic unit body provided in a third embodiment of the present invention;
Fig. 9 is a flowchart of a method for preparing a honeycomb ceramic carrier provided in a fourth embodiment of the present invention;

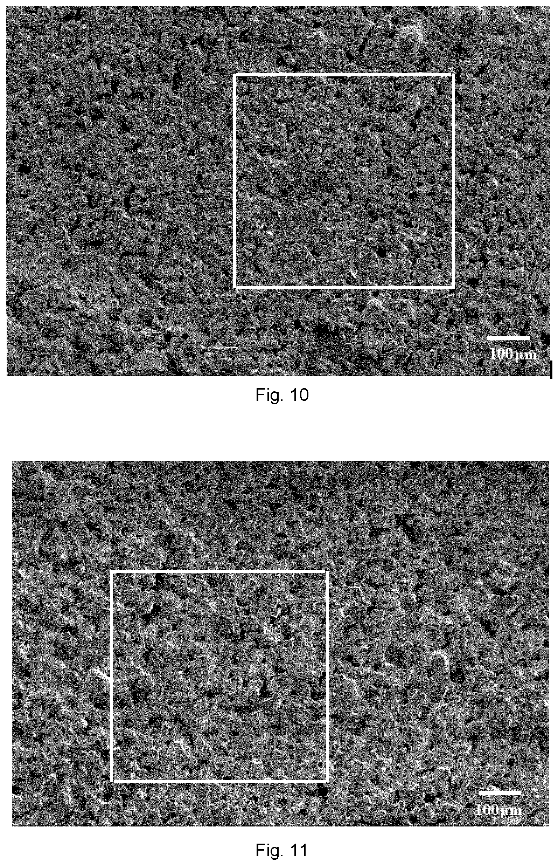

Fig. 10 is a SEM morphological image of pores of a honeycomb ceramic carrier provided in a fifth embodiment of the present invention in a pore diameter sampling region on a first compartment side;
Fig. 11 is a SEM morphological image of pores of the honeycomb ceramic carrier provided in the fifth embodiment of the present invention in a pore diameter sampling region on a second compartment side;

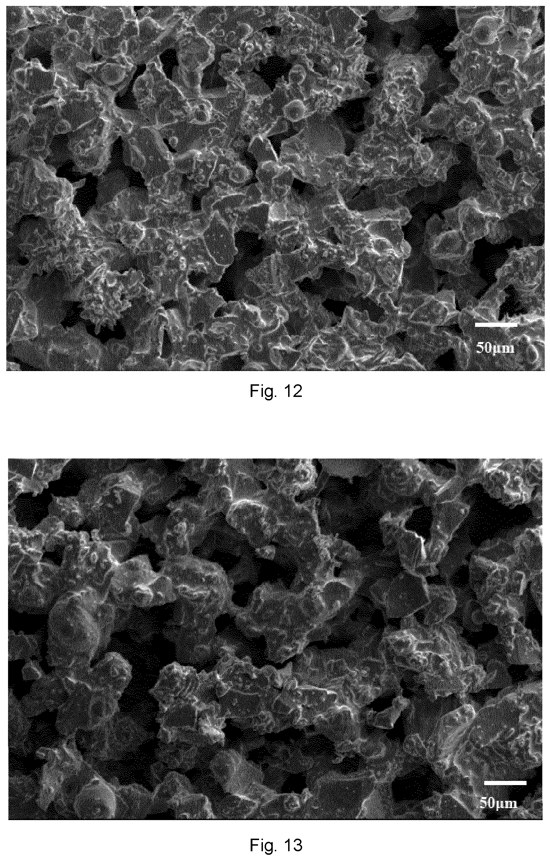

Fig. 12 is a SEM morphological image of pores of the honeycomb ceramic carrier provided in the fifth embodiment of the present invention after partial enlargement of the pore diameter sampling region on the first compartment side;
Fig. 13 is a SEM morphological image of pores of the honeycomb ceramic carrier provided in the fifth embodiment of the present invention after partial enlargement of the pore diameter sampling region on the first compartment side; and

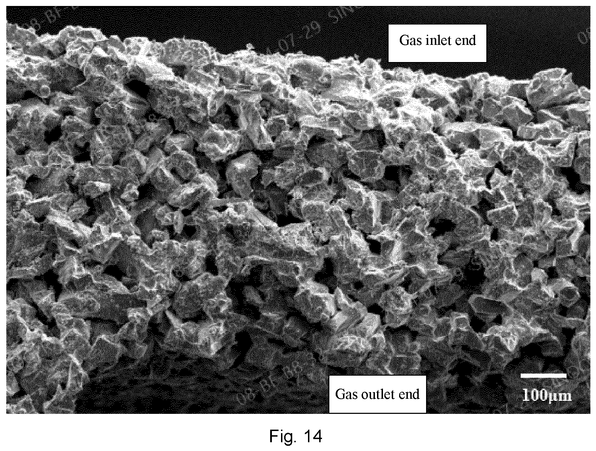

Fig. 14 is a SEM morphological image of a partition wall of the honeycomb ceramic carrier provided in the fifth embodiment of the present invention.

The main reference signs in the drawings of this specification are described as follows:
01-gas inlet side; 02-gas outlet side; 11-first compartment; 12-second compartment.

### Detailed description of the embodiments

The technical solutions in the embodiments of the present invention will be clearly and completely described below. Obviously, the described embodiments are only a part of the embodiments of the present invention, and not all the embodiments. All other embodiments obtained by those skilled in the art on the basis of the embodiments in the present invention without inventive effort are within the scope of protection of the present invention. It should be understood that specific embodiments described herein are only used to illustrate and explain the present invention and are not intended to limit the present invention.

Any specific numerical value disclosed herein (including the endpoint of the numerical range) is not limited to the exact value of the numerical value, but should be understood to further cover values close to the exact value, such as all possible values within the range of ±5% of the exact value. Moreover, for a disclosed numerical range, the endpoint values of the range, the endpoint values and specific point values within the range, and the specific point values may be arbitrarily combined to obtain one or more new numerical ranges, and these new numerical ranges should also be regarded as specifically disclosed herein.

The terminology used in the present disclosure is for the purpose of describing particular exemplary embodiments only and is not intended to be limiting. Unless the context clearly indicates otherwise, the singular forms "a", "an" and "the" as used in the present disclosure may be intended to include plural forms as well. The terms "include", "comprise", "contain" and "have" are inclusive, thus indicating the presence of the features, elements, compositions, steps, integers, operations and/or components, but not excluding the presence or addition of one or more other features, integers, steps, operations, elements, components and/or combinations thereof. Although the open term "comprise" should be understood as a non-limiting term for describing and claiming various embodiments described in the present disclosure, in some aspects, the term may be alternatively understood as a more restrictive and limiting term, such as "consisting of ..." or "consisting essentially of ..." Thus, for any given embodiment of a composition, material, component, element, feature, integer, operation and/or process step stated, the present disclosure also particularly includes an embodiment consisting of or essentially consisting of such a composition, material, component, element, feature, integer, operation and/or process step. In the case of "consisting of ...", alternative embodiments exclude any additional compositions, materials, components, elements, features, integers, operations and/or process steps, and in the case of "consisting essentially of ...", any additional compositions, materials, components, elements, features, integers, operations and/or process steps that essentially affect the basic and novel characteristics are excluded from such embodiments, but any compositions, materials, components, elements, features, integers, operations and/or process steps that do not essentially affect the basic and novel characteristics may be included in the embodiments.

Any method steps, processes, and operations described in the present disclosure are not to be construed as necessarily requiring them to be implemented in a specific order discussed or illustrated, unless a certain order of implementation is explicitly identified. It should further be understood that additional or alternative steps may be used unless otherwise stated.

In the present invention, except for the contents explicitly described, any matters or items not mentioned are directly applicable to those known in the art without any change. Moreover, any embodiment described in the present disclosure can be freely combined with one or more other embodiments described in the present disclosure, and the technical solutions or technical ideas formed thereby are regarded as part of the original disclosure or original recitation of the present invention, and should not be regarded as new contents that have not been disclosed or anticipated in the present disclosure, unless those skilled in the art considers that the combination is obviously unreasonable.

Unless otherwise specified, the terms used herein have the same meaning as commonly understood by those skilled in the art. If a term is defined herein and its definition is different from the commonly understood meaning in the art, the definition herein shall prevail.

Unless otherwise specified, all references to % herein refer to wt.%.

It is worth noting that DOC recorded in the specification of the present application refers to Diesel Oxidation Catalyst; and DPF refers to Diesel Particulate Filter.

It is worth noting that the soot particles described in the specification of the present invention, also referred to as PM, are composed of dry soot, liquid hydrocarbons and a small amount of sulfate. The soot particles may be regarded as a product produced during the incomplete combustion of diesel. A ceramic unit body, a honeycomb ceramic carrier and an exhaust catalytic substrate core provided by the present invention can promote the efficiency of passive regeneration of the soot particles, wherein "passive regeneration" refers to "removing particulate matter in the particle trap by reducing the activation energy of the oxidation reaction of the soot particles without external energy or intervention, and only using the heat brought by the exhaust gas to complete the reaction."

In the context of the present disclosure, Di represents the average pore diameter of openings of pores on a first compartment side, and Do represents the average pore diameter of openings of the pores on a second compartment side.

In the context of the present disclosure, cell density refers to the number of compartments per square inch of area, in unit of mesh; wherein the compartments include both first compartments and second compartments.

It is worth noting that, in some embodiments of the present invention, the above-mentioned exhaust gas catalyst core may be used for catalytic purification of exhaust gas or waste gas, and more specifically, may be used for waste gas or exhaust gas generated by incomplete combustion of diesel.

### First aspect

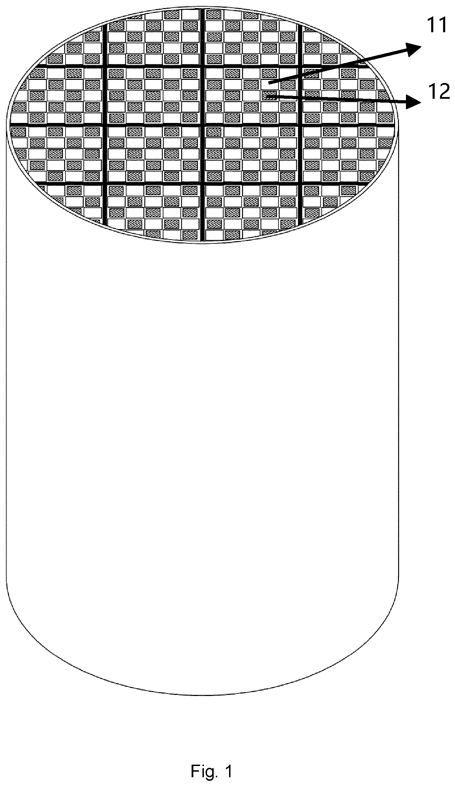

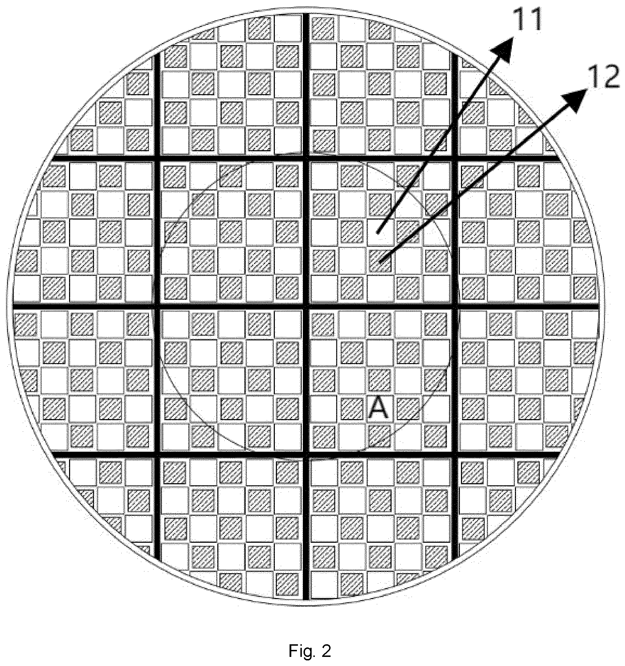

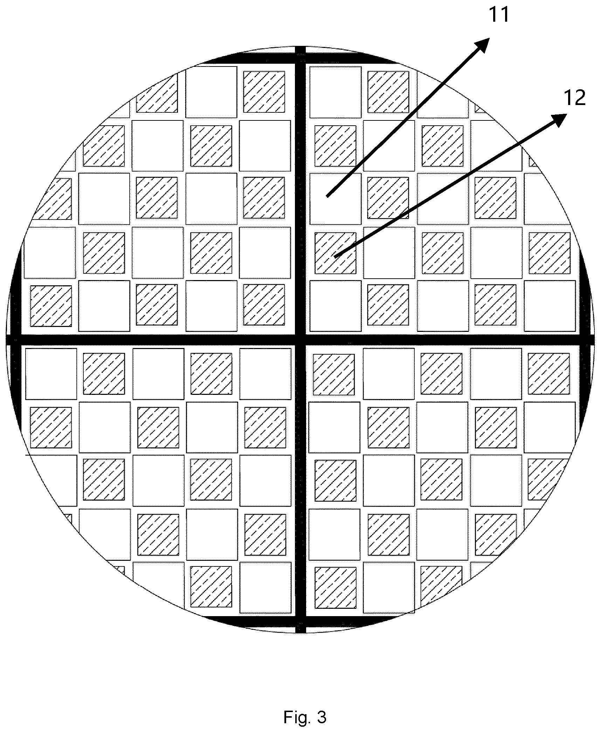

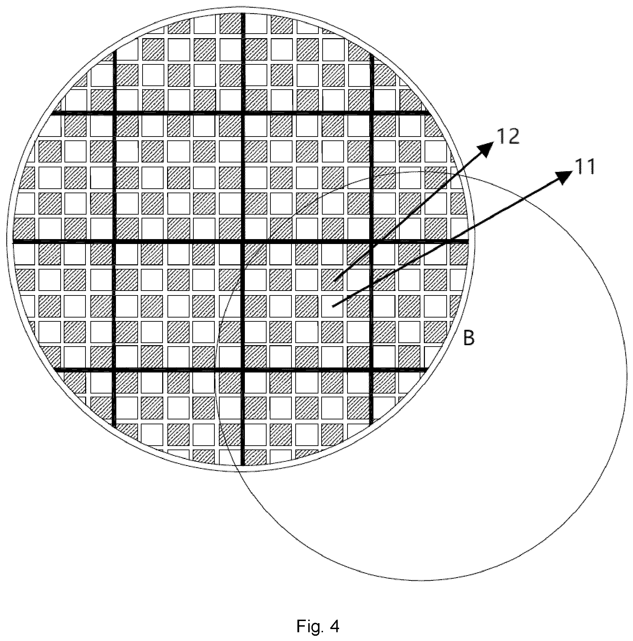

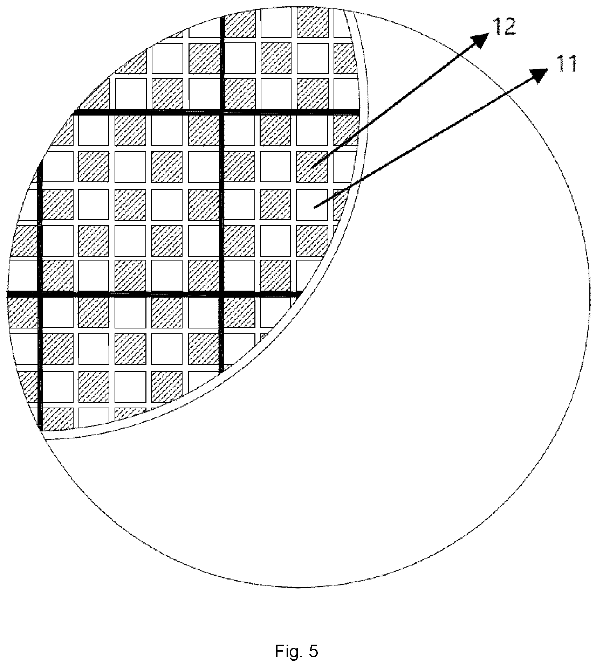

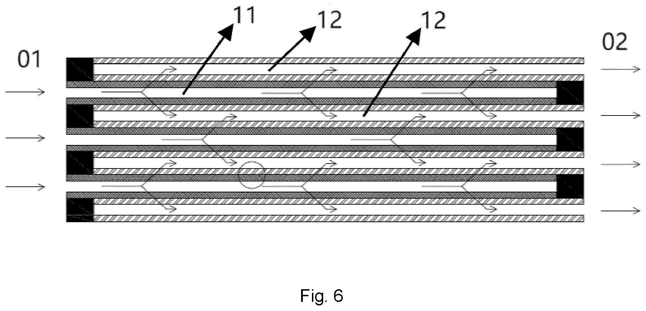

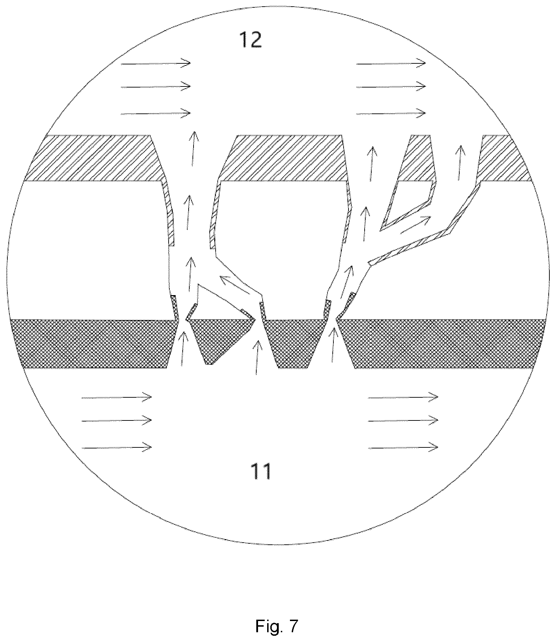

Referring to Figs. 1 to 7, a ceramic unit body is shown. Referring to Fig. 6, two ends of the ceramic unit body in a longitudinal direction define a gas inlet end 01 and a gas outlet end 02, respectively, and the ceramic unit body has a plurality of compartments separated by partition walls and extending along the longitudinal direction of the ceramic unit body. Referring to Figs. 2 to 5, the compartments include first compartments 11 and second compartments 12 alternately arranged in the cross section of the ceramic unit body. Referring to Figs. 6 and 7, the first compartment 11 is open on the gas inlet end 01 side and blocked on the gas outlet end 02 side, and the second compartment 12 is blocked on the gas inlet end 01 side and open on the gas outlet end 02 side. Referring to Fig. 7, the average pore diameter of opening of the pores on a first compartment 11 side is Di, the average pore diameter of opening of the pores on a second compartment 12 side is Do, and Di<Do.

It is worth noting that, since the present invention further provides a honeycomb ceramic carrier composed of a plurality of ceramic unit bodies described above, the specification of the present invention may refer to the schematic structural diagram of the honeycomb ceramic carrier described above when introducing the structure of the ceramic unit bodies described above.

Specifically, the ceramic unit body provided by the present invention has a unique structural design for the partition wall between two compartments inside it. Referring to Figs. 6 and 7, the average pore diameter Di of the opening of the pores on the first compartment 11 side is less than the average pore diameter Do of the opening of the pores on the second compartment 12 side. In other words, each pore on the partition wall almost presents a conical structure, that is, the pore diameter of each pore has such a trend that "the pore diameter gradually increases along the direction of gas flow movement". A small-pore diameter gas inlet can block soot particles that have not yet fully undergone combustion or oxidation reactions outside the conical pores, so that the soot particles temporarily stay in the first compartment 11. In some embodiments of the present invention, the first compartment 11 is coated with a catalyst that can catalyze the soot particles to be fully and completely oxidized. When the soot particles are catalyzed by the catalyst in the first compartment 11 to fully and completely oxidized, they may be carried by the gas flow into the conical pores and reach the second compartment 12. In addition, on the one hand, a large-pore diameter gas outlet of the conical pore can prevent the particles carried by the gas flow from remaining inside the pores and causing blockage, and on the other hand, it can allow a part of the catalyst coated in the second compartment 12 to be coated around the gas outlet of the conical pore, that is, the coating area of the catalyst applied in the second compartment 12 is increased. It can be understood that the larger the catalyst coating area, the more favorable it is to fully facilitate the reactions.

In some embodiments of the present invention, in at least one of the pores, the number of its openings on the first compartment 11 side is at least two, and the pore diameter of at least one of the openings on the first compartment 11 side is less than the pore diameter of the opening of the pore on the second compartment 12 side. Specifically, referring to the pore on the left side in Fig. 7, it has two gas inlet openings on the first compartment 11 side and one gas outlet opening on the second compartment 12 side, that is, gas from the first compartment 11 enters the interior of the pore via the two gas inlet openings and finally enters the second compartment 12 via the sole gas outlet opening of the pore.

In some embodiments of the present invention, in at least one of the pores, the number of its openings on the second compartment 12 side is at least two, and the pore diameter of at least one of the openings on the second compartment 12 side is greater than the pore diameter of the opening of the pore on the first compartment 11 side. Specifically, referring to the pore on the right side of Fig. 7, it has only one gas inlet opening on the first compartment 11 side but two gas outlet openings on the second compartment 12 side, that is, the gas from the first compartment 11 enters the interior of the pore via the sole gas inlet opening and finally enters the second compartment 12 via the two gas outlet openings of the pore.

In some embodiments of the present invention, the average pore diameter Di of the openings of the pores on the first compartment 11 side is in a range of [8, 20] micrometers, preferably, [12, 20] micrometers. It can be understood that, regarding the selection of the size range of Di, it is preferable to isolate the soot particles generated by the incomplete combustion of diesel from the pores. Thus, in some embodiments of the present invention, when the first compartment 11 is coated with a catalyst that can facilitate the full oxidation and combustion of the soot particles, the pores that meet the above Di size design principle can temporarily isolate the soot particles in the first compartment 11, and they can be carried by the gas flow through the pores to reach the second compartment 12 after being fully burned.

In some embodiments of the present invention, the average pore diameter Do of the openings of the pores on the second compartment 12 side is in a range of [11, 23] micrometers, preferably, [15, 23] micrometers. It is worth noting that the larger pore diameter structure of the conical pores can increase the coating area of the catalyst when the catalyst is subsequently coated on the second compartment 12, and the larger the catalyst coating area, the more favorable it is to the catalytic reaction.

In some embodiments of the present invention, both the first compartment 11 and the second compartment 12 have a square or rectangular cross section. It can be understood that a first compartment 11 having a square cross-section or a rectangular cross-section is surrounded by second compartments 12 adjacent thereto on all four sides, so that the gas entering the first compartment 11 can directly enter the second compartment(s) 12 after leaving, thereby improving the compactness of the ceramic unit body structure and reducing the waste of space and materials.

In some embodiments of the present invention, the first compartments 11 and the second compartments 12 are alternately arranged in a checkerboard pattern in the cross section of the ceramic unit body. This design concept can improve the structural compactness of the ceramic unit body and reduce the waste of space and materials.

In some embodiments of the present invention, the thickness of the partition wall is 3 to 10 mil (about 75 to 250 µm), preferably 5 to 8 mil (about 125 to 200 µm). It is worth noting that the thickness of a partition wall of the ceramic unit body is set within this range. On the one hand, it can reduce the pressure difference between the gas inlet side 01 and the gas outlet side 02 of the ceramic unit body. It can be understood that the smaller the pressure difference, the more favorable it is to the circulation of gas and the purification reaction. The thicker the wall, the deeper the pores, and the longer the flow path of the gas flow in the pores, which will eventually lead to a larger pressure difference between the gas inlet side 01 and the gas outlet side 02 of the ceramic unit body. On the other hand, the appropriate wall thickness can ensure that the ceramic unit body has sufficient rigidity to avoid deformation, brittle fracture and other problems during service.

In some embodiments of the present invention, the ceramic unit body has a porosity of 35% to 55%, preferably 35% to 45%. Porosity is a ratio of the volume of pores to the total volume of the material. It is worth noting that the porosity of the ceramic unit body is set within this range. On the one hand, it can reduce the pressure difference between the gas inlet side 01 and the gas outlet side 02 of the ceramic unit body. It can be understood that the smaller the pressure difference, the more favorable it is to the circulation of gas and the purification reaction. On the other hand, the appropriate porosity can ensure that the ceramic unit body has sufficient rigidity to avoid deformation, brittle fracture and other problems during service.

In some embodiments of the present invention, the distribution density of the pores on the partition wall, also referred to as the porosity, is 35% to 55%. The "distribution density" refers to a ratio of the cross-sectional area of the pores to the area of the respective partition wall. It is worth noting that the distribution density of the pores of the ceramic unit body is set within this range. On the one hand, it can reduce the pressure difference between the gas inlet side 01 and the gas outlet side 02 of the ceramic unit body. It can be understood that the smaller the pressure difference, the more favorable it is to the circulation of gas and the purification reaction. On the other hand, the appropriate distribution density of the pores can ensure that the ceramic unit body has sufficient rigidity to avoid deformation, brittle fracture and other problems during service.

In some embodiments of the present invention, the compartment density of the compartments in the cross section of the ceramic unit body, namely, cell density, is 200 to 500 mesh. It is worth noting that the compartment density of the ceramic unit body is set within this range. On the one hand, it can reduce the pressure difference between the gas inlet side 01 and the gas outlet side 02 of the ceramic unit body. It can be understood that the smaller the pressure difference, the more favorable it is to the circulation of gas and the purification reaction. On the other hand, the appropriate compartment density can ensure that the ceramic unit body has sufficient rigidity to avoid deformation, brittle fracture and other problems during service. In addition, under certain conditions, a larger compartment density can increase the coating area of the catalyst so as to facilitate the full promotion of the reaction.

In some embodiments of the present invention, the cross-sectional area of the first compartment is greater than the cross-sectional area of the second compartment. It is worth noting that the larger first compartment can fully reduce the honeycomb ceramic back pressure after a filter captures the soot particles, reducing energy consumption; also, the first compartment is coated with a higher content of oxidation catalyst, which can effectively convert the captured soot particles, and passively regenerate and convert more soot particles at a lower temperature, reducing the active regeneration of the filter.

In some embodiments of the present invention, the cross-sectional area of the first compartment is less than the cross-sectional area of the second compartment.

In some embodiments of the present invention, the cross-sectional area of the first compartment is equal to the cross-sectional area of the second compartment.

### Second aspect

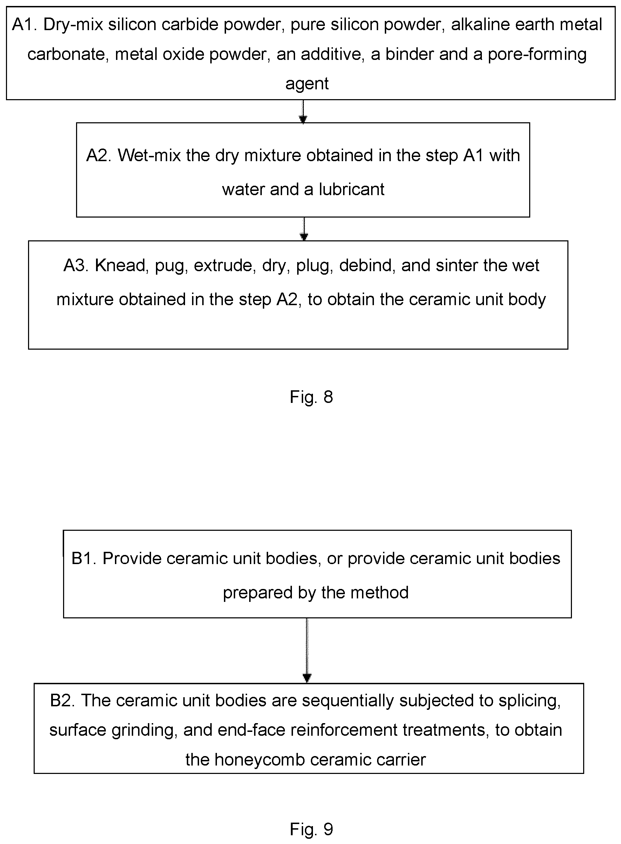

Referring to Fig. 8, a method for preparing the above-mentioned ceramic unit body includes the following steps: A1, dry-mixing silicon carbide powder, silicon powder, alkaline earth metal carbonate, metal oxide powder, an additive, a binder and a pore-forming agent; A2, wet-mixing the dry mixture obtained in step A1 with water and a lubricant; and A3, kneading, pugging, extruding, drying, plugging, debinding, and sintering the wet mixture obtained in step A2 to obtain the ceramic unit body; wherein the sintering in the step A3 includes oxygen-free sintering and oxidation sintering performed sequentially, and the oxidation sintering process is as follows: exposing a gas inlet end 01 of a green body that has completed oxygen-free sintering to air, and performing negative pressure extraction on a gas outlet end 02 of the green body, allowing the air to sequentially pass through the first compartments 11, the pores, the second compartments 12 from the gas inlet end 01 of the green body and then leave the green body from the gas outlet end 02, so as to form the pores in such a way that the average pore diameter Do of the openings of the pores on the second compartment 12 side is greater than the average pore diameter Di of the opening of the pores on the first compartment 11 side.

It can be understood that when preparing the above-mentioned ceramic unit body, since the "pore-forming agent in the raw material" is used to form holes, the morphology of the pores on the partition walls in the final product will be different; however, the present invention prepares the ceramic unit body by "first oxygen-free sintering, and then oxidative sintering", making the end of the respective pore close to the gas inlet side 01 to be oxidized first, so that the small-sized silicon at this position is oxidized to become larger-sized silicon dioxide, enabling most of the pores to achieve the effect of "the pore diameter of the gas inlet being less than the pore diameter of the gas outlet, thereby obtaining pores with a conical structure".

In some embodiments of the present invention, the dry mixing is performed using a plowshare high-speed mixer, with a dry mixing duration of 10 to 30 min, and a dry mixing speed of 50 to 200 rpm.

In some embodiments of the present invention, a wet mixing duration is 1 to 20 min, and a wet mixing speed is 50 to 200 rpm.

In some embodiments of the present invention, the kneading is performed using a biaxial kneading machine, with a kneading duration of 30 to 180 min.

In some embodiments of the present invention, in the step A1, a negative pressure used in the negative pressure extraction is (-0.05) to (-0.02) MPa.

In some embodiments of the present invention, in the step A1, the silicon carbide powder includes first silicon carbide powder with an average particle size of 20 to 30 µm and second silicon carbide powder with an average particle size of 3 to 8 µm.

In some embodiments of the present invention, in the step A1, based on a total amount of the silicon carbide powder being 100 wt.%, the first silicon carbide powder accounts for 70 wt.% to 95 wt.% of the total silicon carbide powder, and the second silicon carbide powder accounts for 5 wt.% to 30 wt.% of the total silicon carbide powder.

In some embodiments of the present invention, in the steps A1 and A2, based on a total mass of raw materials being 100 wt.%, the silicon carbide powder accounts for 50 wt.% to 75 wt.%, preferably 50 wt.% to 65 wt.%, the silicon powder accounts for 15 wt.% to 25 wt.%, preferably 15 wt.% to 20 wt.%, the alkaline earth metal carbonate accounts for 1 wt.% to 2 wt. %, the metal oxide powder accounts for 0.2 wt.% to 1 wt. %, the additive accounts for 0.5 wt.% to 1.5 wt. %, the binder accounts for 6 wt.% to 15 wt. %, the pore-forming agent accounts for 3 wt.% to 18 wt.%, and the lubricant accounts for 5 wt.% to 11 wt.%. The total mass percentage of the raw materials is the sum of the mass percentages of the respective raw materials, excluding the mass of water.

In some embodiments of the present invention, an average particle size of the silicon powder is 3 to 10 µm, an average particle size of the alkaline earth metal carbonate is 2 to 6 µm, an average particle size of the metal oxide is 3 to 8 µm, and an average particle size of the pore-forming agent is 8 to 40 µm.

In some embodiments of the present invention, the alkaline earth metal carbonate is selected from at least one of magnesium carbonate, strontium carbonate, barium carbonate and calcium carbonate.

In some embodiments of the present invention, the metal oxide is selected from at least one of aluminum oxide and titanium oxide.

In some embodiments of the present invention, the additive is selected from at least one of bentonite and kaolin.

In some embodiments of the present invention, the binder is selected from at least one of organic alcohols, potassium laurate, modified cellulose, polyethylene oxide, and polyvinyl pyrrolidone. The organic alcohol includes monohydric alcohols, dihydric alcohols, and polyhydric alcohols, preferably C1-C8 monohydric alcohols, dihydric alcohols and polyhydric alcohols, and more preferably C1-C4 monohydric alcohols, dihydric alcohols and polyhydric alcohols. Examples of the organic alcohol include, but are not limited to, 1,2-propylene glycol, ethylene glycol, butanediol, 1,3-propylene glycol, and pentaerythritol. The modified cellulose includes, but is not limited to, hydroxymethyl cellulose, hydroxyethyl cellulose, hydroxypropyl cellulose, methyl cellulose, ethyl cellulose, and propyl cellulose.

In some embodiments of the present invention, the pore-forming agent is selected from at least one of walnut powder, graphite, benzoic acid, starch, ammonium bicarbonate, ammonium chloride, polymethyl methacrylate, and expanded microspheres.

In some embodiments of the present invention, the lubricant is glycerin.

### Third aspect

A honeycomb ceramic carrier, wherein the honeycomb ceramic carrier is composed of the ceramic unit bodies described above or ceramic unit bodies prepared by the method described above, the ceramic unit bodies are distributed and connected in a cross section of the honeycomb ceramic carrier, and the ceramic unit bodies have the same longitudinal direction as the honeycomb ceramic carrier.

In some embodiments of the present invention, the honeycomb ceramic carrier has a thermal conductivity of 5 to 30 W/m•K, preferably 10 to 30 W/m•K, and more preferably 13 to 25 W/m•K.

In some embodiments of the present invention, the honeycomb ceramic carrier is a cylinder or a polygonal prism.

### Fourth aspect

Referring to Fig. 9, the present invention provides a method for preparing the honeycomb ceramic carrier described above, including the following steps: B1, providing the ceramic unit bodies described above, or providing ceramic unit bodies prepared by the method described above; and B2, the ceramic unit bodies being sequentially subjected to splicing, surface grinding, and end-face reinforcement treatments, to obtain the honeycomb ceramic carrier.

### Fifth aspect

The present invention provides an exhaust catalytic substrate core, including: the honeycomb ceramic carrier described above, or a honeycomb ceramic carrier prepared by the method described above; a first catalyst applied to inner wall surfaces of first compartments 11 of the honeycomb ceramic carrier; and a second catalyst applied to inner wall surfaces of second compartments 12 of the honeycomb ceramic carrier. Referring to Figs. 6 and 7, the first compartments 11 are open on a gas inlet end 01 side and blocked on a gas outlet end 02 side, and the second compartments 12 are blocked on a gas inlet end 01 side and open on a gas outlet end 02 side.

In some embodiments of the present invention, the exhaust catalytic substrate core is configured for catalytically treating exhaust gas containing soot particles, the first catalyst is used to promote oxidation of the soot particles, and the second catalyst is used to catalyzecarbon monoxide, hydrocarbons and nitrogen oxides.

In some embodiments of the present invention, the first catalyst is a DPF, namely a Diesel Particle Filter; and the second catalyst is a DOC, namely a Diesel Oxidation Catalyst.

The present invention designs the above-mentioned ceramic unit body, honeycomb ceramic carrier and exhaust catalytic substrate core, and its conception is to provide a silicon carbide DPF and DOC honeycomb ceramic carrier that integrates the functions of DPF and DOC while making full use of the pore channel structure of wall-flow honeycomb ceramics. It loads the DPF oxidation catalyst and the DOC oxidation catalyst simultaneously, effectively reducing the total volume and cost of the post-treatment system. Its regeneration temperature equilibrium point after loading is lower, and the capture efficiency and exhaust gas conversion rate are similar to those of the DPF+DOC exhaust gas treatment system. Also, the volume and cost of the diesel vehicle emission system are saved.

The silicon carbide honeycomb ceramic carrier that can be coated with an oxidation catalyst provided by the present invention increases the contact area between the catalyst and the reaction gas by controlling the cell density of the carrier and increasing the opening area on the outlet side of the carrier. Both DPF and DOC catalysts can be simultaneously coated, and the conversion rate of exhaust gas and the particle capture efficiency are similar to those of the DPF + DOC exhaust system, saving the volume and cost of the waste exhaust system of diesel vehicles.

### Example 1

In this example, 54.5 wt.% of silicon carbide powder in which a first silicon carbide powder accounts for 88 wt.% of the total silicon carbide powder and a second silicon carbide powder accounts for 12 wt.% of the total silicon carbide powder, 19% of metal silicon powder, 1% of alkaline earth metal carbonate, 0.5% of metal oxide powder, 1% of an additive, 10% of a binder, and 4% of a pore-forming agent were added to a plowshare mixer for dry mixing for 15 min, with a rotation speed of 95 rpm. After the dry mixing was completed, 10% of a lubricant and 35% of water by mass fraction of the raw materials were added for wet mixing, with a wet mixing duration of 5min, and a rotation speed of 95rpm. The obtained raw material mixture was added to a double-shaft kneading machine (= "biaxial kneading machine") to perform kneading for 60 min. After the kneaded mud was pugged, it was put into an extruder and, using a 300 mesh mold with a wall thickness of 3 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.02 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.946 mm², and the cross-sectional area of the second compartment is 1.177 mm².

### Example 2

In this example, 56.5 wt.% of silicon carbide powder in which a first silicon carbide powder accounts for 88.5 wt.% of the total silicon carbide powder and a second silicon carbide powder accounts for 11.5 wt.% of the total silicon carbide powder, 20% of metal silicon powder, 1% of alkaline earth metal carbonate, 0.5% of metal oxide powder, 1% of an additive, 9% of a binder, and 4% of a pore-forming agent were added to a plowshare mixer for dry mixing for 15 minutes, with a rotation speed of 95 rpm. After the dry mixing was completed, 8% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 300 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this embodiment is 1.946 mm², and the cross-sectional area of the second compartment is 1.177 mm².

### Example 3

In this example, 59 wt.% of silicon carbide powder in which a first silicon carbide powder accounts for 88 wt.% of the total silicon carbide powder and a second silicon carbide powder accounts for 12 wt.% of the total silicon carbide powder, 20% of metal silicon powder, 1% of alkaline earth metal carbonate, 1% of metal oxide powder, 1% of an additive, 7% of a binder, and 3% of a pore-forming agent were added to a plowshare mixer for dry mixing for 15 min, with a rotation speed of 95 rpm. After the dry mixing was completed, 8% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 300 mesh mold with a wall thickness of 8 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.946 mm², and the cross-sectional area of the second compartment is 1.177 mm².

### Example 4

In this example, 61 wt.% of silicon carbide powder in which a first silicon carbide powder accounts for 86 wt.% of the total silicon carbide powder and a second silicon carbide powder accounts for 14 wt.% of the total silicon carbide powder, 20% of metal silicon powder, 1.5% of alkaline earth metal carbonate, 0.5% of metal oxide powder, 0.5% of an additive, 6.5% of a binder, and 3% of a pore-forming agent were added to a plowshare mixer for dry mixing for 15 min, with a rotation speed of 95 rpm. After the dry mixing was completed, 7% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 400 mesh mold with a wall thickness of 3 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.04 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.550 mm², and the cross-sectional area of the second compartment is 0.912 mm².

### Example 5

In this example, 60 wt.% of silicon carbide powder in which a first silicon carbide powder accounts for 91.7 wt.% of the total silicon carbide powder and a second silicon carbide powder accounts for 8.3 wt.% of the total silicon carbide powder, 18% of metal silicon powder, 2% of alkaline earth metal carbonate, 0.5% of metal oxide powder, 1.5% of an additive, 7% of a binder, and 3% of a pore-forming agent were added to a plowshare mixer for dry mixing for 15 min, with a rotation speed of 95 rpm. After the dry mixing was completed, 8% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 400 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.550 mm², and the cross-sectional area of the second compartment is 0.912 mm².

### Example 6

In this example, 63 wt.% of silicon carbide powder in which a first silicon carbide powder accounts for 90 wt.% of the total silicon carbide powder and a second silicon carbide powder accounts for 10 wt.% of the total silicon carbide powder, 19% of metal silicon powder, 1% of alkaline earth metal carbonate, 0.5% of metal oxide powder, 0.5% of an additive, 6% of a binder, and 4% of a pore-forming agent were added to a plowshare mixer for dry mixing for 15 min, with a rotation speed of 95 rpm. After the dry mixing was completed, 6% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 400 mesh mold with a wall thickness of 8 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.550 mm², and the cross-sectional area of the second compartment is 0.912 mm².

### Example 7

In this example, 60 wt.% of silicon carbide powder in which a first silicon carbide powder accounts for 75 wt.% of the total silicon carbide powder and a second silicon carbide powder accounts for 25 wt.% of the total silicon carbide powder, 16% of metal silicon powder, 2% of alkaline earth metal carbonate, 1% of metal oxide powder, 1.5% of an additive, 7.5% of a binder, and 4% of a pore-forming agent were added to a plowshare mixer for dry mixing for 15 min, with a rotation speed of 95 rpm. After the dry mixing was completed, 8% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 500 mesh mold with a wall thickness of 3 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.188 mm², and the cross-sectional area of the second compartment is 0.716 mm².

### Example 8

In this example, 61 wt.% of silicon carbide powder in which a first silicon carbide powder accounts for 84 wt.% of the total silicon carbide powder and a second silicon carbide powder accounts for 16 wt.% of the total silicon carbide powder, 17% of metal silicon powder, 1.5% of alkaline earth metal carbonate, 0.5% of metal oxide powder, 1% of an additive, 7% of a binder, and 4% of a pore-forming agent were added to a plowshare mixer for dry mixing for 15 min, with a rotation speed of 95 rpm. After the dry mixing was completed, 8% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 500 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.05 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.188 mm², and the cross-sectional area of the second compartment is 0.716 mm².

### Example 9

In this example, 61 wt.% of silicon carbide powder in which a first silicon carbide powder accounts for 75 wt.% of the total silicon carbide powder and a second silicon carbide powder accounts for 25 wt.% of the total silicon carbide powder, 15% of metal silicon powder, 2% of alkaline earth metal carbonate, 1% of metal oxide powder, 1% of an additive, 8% of a binder, and 4% of a pore-forming agent were added to a plowshare mixer for dry mixing for 15 min, with a rotation speed of 95 rpm. After the dry mixing was completed, 8% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 500 mesh mold with a wall thickness of 8 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.05 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.188 mm², and the cross-sectional area of the second compartment is 0.716 mm².

### Example 10

In this example, 58 wt.% of silicon carbide powder in which a first silicon carbide powder accounts for 86 wt.% of the total silicon carbide powder and a second silicon carbide powder accounts for 14 wt.% of the total silicon carbide powder, 16% of metal silicon powder, 2% of alkaline earth metal carbonate, 0.5% of metal oxide powder, 1% of an additive, 9% of a binder, and 4% of a pore-forming agent were added to a plowshare mixer for dry mixing for 15 min, with a rotation speed of 95 rpm. After the dry mixing was completed, 9.5% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 300 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.946 mm², and the cross-sectional area of the second compartment is 1.177 mm².

### Example 11

In this example, 55 wt.% of silicon carbide powder in which a first silicon carbide powder accounts for 93 wt.% of the total silicon carbide powder and a second silicon carbide powder accounts for 7 wt.% of the total silicon carbide powder, 15% of metal silicon powder, 1% of alkaline earth metal carbonate, 0.5% of metal oxide powder, 0.5% of an additive, 7% of a binder, and 15% of a pore-forming agent were added to a plowshare mixer for dry mixing for 15 min, with a rotation speed of 95 rpm. After the dry mixing was completed, 6% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 300 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.946 mm², and the cross-sectional area of the second compartment is 1.177 mm².

### Example 12

In this example, 59 wt.% of silicon carbide powder in which a first silicon carbide powder accounts for 87 wt.% of the total silicon carbide powder and a second silicon carbide powder accounts for 13 wt.% of the total silicon carbide powder, 18% of metal silicon powder, 2% of alkaline earth metal carbonate, 0.5% of metal oxide powder, 1% of an additive, 13.5% of a binder, and 5% of a pore-forming agent were added to a plowshare mixer for dry mixing for 15 min, with a rotation speed of 95 rpm. After the dry mixing was completed, 8% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 400 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.550 mm², and the cross-sectional area of the second compartment is 0.912 mm².

### Example 13

In this example, 51 wt.% of silicon carbide powder in which a first silicon carbide powder accounts for 84 wt.% of the total silicon carbide powder and a second silicon carbide powder accounts for 16 wt.% of the total silicon carbide powder, 15% of metal silicon powder, 2% of alkaline earth metal carbonate, 1% of metal oxide powder, 1% of an additive, 7% of a binder, and 15% of a pore-forming agent were added to a plowshare mixer for dry mixing for 15 min, with a rotation speed of 95 rpm. After the dry mixing was completed, 8% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 400 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.550 mm², and the cross-sectional area of the second compartment is 0.912 mm².

### Example 14

In this example, 56 wt.% of silicon carbide powder in which a first silicon carbide powder accounts for 82 wt.% of the total silicon carbide powder and a second silicon carbide powder accounts for 18 wt.% of the total silicon carbide powder, 18% of metal silicon powder, 2% of alkaline earth metal carbonate, 0.5% of metal oxide powder, 1% of an additive, 9% of a binder, and 3% of a pore-forming agent were added to a plowshare mixer for dry mixing for 15 min, with a rotation speed of 95 rpm. After the dry mixing was completed, 10.5% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 500 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.188 mm², and the cross-sectional area of the second compartment is 0.716 mm².

### Example 15

In this example, 54 wt.% of silicon carbide powder in which a first silicon carbide powder accounts for 89 wt.% of the total silicon carbide powder and a second silicon carbide powder accounts for 11 wt.% of the total silicon carbide powder, 16% of metal silicon powder, 1% of alkaline earth metal carbonate, 0.5% of metal oxide powder, 1% of an additive, 6.5% of a binder, and 15% of a pore-forming agent were added to a plowshare mixer for dry mixing for 15 min, with a rotation speed of 95 rpm. After the dry mixing was completed, 6% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 500 mesh mold with a wall thickness of 8 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.188 mm², and the cross-sectional area of the second compartment is 0.716 mm².

### Example 16

In this example, 56 wt.% of silicon carbide powder in which a first silicon carbide powder accounts for 82 wt.% of the total silicon carbide powder and a second silicon carbide powder accounts for 18 wt.% of the total silicon carbide powder, 17% of metal silicon powder, 2% of alkaline earth metal carbonate, 0.5% of metal oxide powder, 1% of an additive, 9.5% of a binder, and 4% of a pore-forming agent were added to a plowshare mixer for dry mixing for 15 min, with a rotation speed of 95 rpm. After the dry mixing was completed, 10% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 200 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 2.372 mm², and the cross-sectional area of the second compartment is 1.428 mm².

### Example 17

In this example, 54 wt.% of silicon carbide powder in which a first silicon carbide powder accounts for 84 wt.% of the total silicon carbide powder and a second silicon carbide powder accounts for 16 wt.% of the total silicon carbide powder, 17% of metal silicon powder, 1.5% of alkaline earth metal carbonate, 1% of metal oxide powder, 1% of an additive, 9% of a binder, and 4% of a pore-forming agent were added to a plowshare mixer for dry mixing for 15 min, with a rotation speed of 95 rpm. After the dry mixing was completed, 10.5% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 300 mesh mold with a wall thickness of 12 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.946 mm², and the cross-sectional area of the second compartment is 1.177 mm².

### Example 18

In this example, 58 wt.% of silicon carbide powder in which a first silicon carbide powder accounts for 83 wt.% of the total silicon carbide powder and a second silicon carbide powder accounts for 17 wt.% of the total silicon carbide powder, 18% of metal silicon powder, 1.5% of alkaline earth metal carbonate, 0.5% of metal oxide powder, 1% of an additive, 10% of a binder, and 2% of a pore-forming agent were added to a plowshare mixer for dry mixing for 15 min, with a rotation speed of 95 rpm. After the dry mixing was completed, 9% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 400 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.550 mm², and the cross-sectional area of the second compartment is 0.912 mm².

### Example 19

In this example, 50 wt.% of silicon carbide powder in which a first silicon carbide powder accounts for 90 wt.% of the total silicon carbide powder and a second silicon carbide powder accounts for 10 wt.% of the total silicon carbide powder, 15% of metal silicon powder, 1% of alkaline earth metal carbonate, 0.5% of metal oxide powder, 0.5% of an additive, 6% of a binder, and 20% of a pore-forming agent were added to a plowshare mixer for dry mixing for 15 min, with a rotation speed of 95 rpm. After the dry mixing was completed, 7% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 400 mesh mold with a wall thickness of 6 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.550 mm², and the cross-sectional area of the second compartment is 0.912 mm².

### Comparative Example 1

In this example, 57 wt.% of silicon carbide powder in which a first silicon carbide powder accounts for 86 wt.% of the total silicon carbide powder and a second silicon carbide powder accounts for 14 wt.% of the total silicon carbide powder, 16% of metal silicon powder, 2% of alkaline earth metal carbonate, 1% of metal oxide powder, 1% of an additive, 9% of a binder, and 4% of a pore-forming agent were added to a plowshare mixer for dry mixing for 15 min, with a rotation speed of 95 rpm. After the dry mixing was completed, 10% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 600 mesh mold with a wall thickness of 3 mil, extruded to form a unit body. Then, the unit body was subjected to microwave drying, pore plugging, debinding, oxygen-free sintering, and oxidation sintering. During the oxidation sintering process, an outlet end of the unit body was negatively pressured for extraction, to allow air to sequentially pass through an inlet side, a porous partition wall and an outlet side of the unit body. The negative pressure at the outlet end is -0.03 MPa. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 0.884 mm², and the cross-sectional area of the second compartment is 0.531 mm².

### Comparative Example 2

In this example, 57 wt.% of silicon carbide powder in which a first silicon carbide powder accounts for 84 wt.% of the total silicon carbide powder and a second silicon carbide powder accounts for 16 wt.% of the total silicon carbide powder, 17% of metal silicon powder, 2% of alkaline earth metal carbonate, 1% of metal oxide powder, 1% of an additive, 9% of a binder, and 4% of a pore-forming agent were added to a plowshare mixer for dry mixing for 15 min, with a rotation speed of 95 rpm. After the dry mixing was completed, 9% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 300 mesh mold with a wall thickness of 3 mil, extruded to form a unit body. Then, the unit body was subjected to microwave drying, pore plugging, debinding, oxygen-free sintering, and oxidation sintering, wherein the oxidation sintering is carried out without the negative pressure extraction process. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.946 mm², and the cross-sectional area of the second compartment is 1.177 mm².

### Comparative Example 3

In this example, 57 wt.% of silicon carbide powder in which a first silicon carbide powder accounts for 86 wt.% of the total silicon carbide powder and a second silicon carbide powder accounts for 14 wt.% of the total silicon carbide powder, 16% of metal silicon powder, 2% of alkaline earth metal carbonate, 1% of metal oxide powder, 1% of an additive, 9% of a binder, and 4% of a pore-forming agent were added to a plowshare mixer for dry mixing for 15 min, with a rotation speed of 95 rpm. After the dry mixing was completed, 10% of a lubricant and 35% of water by mass fraction of the raw materials were added for wet mixing, with a wet mixing duration of 5 min, and a rotation speed of 95 rpm. The obtained raw material mixture was added to a double-shaft kneading machine to perform kneading for 60 min. After the kneaded mud was pugged, it was put into an extruder and, using a 400 mesh mold with a wall thickness of 6 mil, extruded to form a unit body. Then, the unit body was subjected to microwave drying, pore plugging, debinding, oxygen-free sintering, and oxidation sintering, wherein the oxidation sintering is carried out without the negative pressure extraction process. Subsequently, the above-mentioned silicon carbide honeycomb ceramic carrier that can be coated with an oxidation catalyst was obtained through sequential steps of splicing, surface grinding, and end-face reinforcement, etc. The cross-sectional area of the first compartment of the honeycomb ceramic unit body provided in this example is 1.550 mm², and the cross-sectional area of the second compartment is 0.912 mm².

The types of raw materials in Examples 1 to 19 and Comparative Examples 1 to 3 described above are listed in Table 1 below.

**Table 1 Types of raw materials in Examples 1 to 19 and Comparative Examples 1 to 3 (silicon carbide powder, silicon powder, and a lubricant are not listed)**

| | Pore-forming agent | Alkaline earth metal carbonate | Additive | Binder | Metal oxide |
|---|---|---|---|---|---|
| Example 1 | Walnut powder | Magnesium carbonate | Kaolin | Glycerol | Alumina |
| Example 2 | Graphite | Magnesium carbonate | Kaolin | Polyethylene glycol | Alumina |
| Example 3 | Starch | Magnesium carbonate | Kaolin | 1,2-Propanediol | Alumina |
| Example 4 | Ammonium bicarbonate | Magnesium carbonate | Kaolin | Polyethylene glycol : hydroxymethyl cellulose = 1:1 | Alumina |
| Example 5 | Polymethyl methacrylate | Calcium carbonate | Kaolin | Polyethylene oxide | Alumina |
| Example 6 | Expanded microspheres | Calcium carbonate | Kaolin | Polyvinyl alcohol | Alumina |
| Example 7 | Walnut powder : graphite = 1:1 | Calcium carbonate | Kaolin | Polyvinyl alcohol : potassium laurate = 1:1 | Alumina |
| Example 8 | Walnut powder : starch = 1:1 | Strontium carbonate | Bentonite | Polypropylene alcohol : potassium laurate = 1:1 | Alumina |
| Example 9 | Starch : expanded microspheres = 1:1 | Strontium carbonate | Bentonite | Polyvinyl alcohol : potassium laurate = 1:1 | Titanium oxide |
| Example 10 | Graphite : polymethyl methacrylate = 2:1 | Strontium carbonate | Bentonite | Polyethylene glycol : potassium laurate = 1:2 | Titanium oxide |
| Example 11 | Starch : ammonium bicarbonate = 2:1 | Strontium carbonate | Bentonite | Potassium laurate : carboxymethyl cellulose = 2:1 | Titanium oxide |
| Example 12 | Ammonium bicarbonate : expanded spheres = 1:1 | Strontium carbonate | Bentonite | Glycerol : carboxymethyl cellulose = 1:1 | Titanium oxide |
| Example 13 | Walnut powder : starch : graphite = 1:1:1 | Barium carbonate | Bentonite | Glycerol : carboxymethyl cellulose = 1:1 | Titanium oxide |
| Example 14 | Starch : graphite : expanded spheres = 1:1:1 | Barium carbonate | Bentonite | Glycerol : hydroxymethyl cellulose = 1:1 | Titanium oxide |
| Example 15 | Starch : ammonium bicarbonate : expanded spheres = 1:1:1 | Barium carbonate | Bentonite | Polyvinyl pyrrolidone : potassium laurate : carboxymethyl cellulose = 1:2:1 | Titanium oxide |
| Example 16 | Walnut powder | Magnesium carbonate | Kaolin | Glycerol | Alumina |
| Example 17 | Walnut powder | Magnesium carbonate | Kaolin | Glycerol | Alumina |
| Example 18 | Walnut powder | Magnesium carbonate | Kaolin | Glycerol | Alumina |
| Example 19 | Walnut powder | Magnesium carbonate | Kaolin | Glycerol | Alumina |
| Comparative Example 1 | Walnut powder | Magnesium carbonate | Kaolin | Glycerol | Alumina |
| Comparative Example 2 | Walnut powder | Barium carbonate | Kaolin | Glycerol | Alumina |
| Comparative Example 3 | Walnut powder | Magnesium carbonate | Kaolin | Glycerol | Alumina |

The porosity of the honeycomb ceramic carrier obtained in each of the examples and comparative examples described above was tested and obtained by a drainage method. The pore volume was tested by a mercury intrusion method, and was measured by making a sample block with a length, width and height of 10 mm*10 mm*15 mm from the unit body using a mercury intrusion instrument (MicroActive AutoPore V 9600 Version 2.03.00) of the American Micromeritics Corporation. The test method is based on the national standard: GB/T21650.1-2008, and the results are shown in Table 2 below.

The average pore diameter of the openings of the pores on the gas inlet side and the average pore diameter of the openings of the pores on the gas outlet side of the honeycomb ceramic carrier obtained in each of the examples and comparative examples described above were obtained by the following method: (1) the partition wall of the honeycomb ceramic carrier is made into a plurality of 1 mm * 1 mm samples, the samples are distinguished in terms of an inlet side and an outlet side, the same side is tested during the test process, the side/surface to be tested is placed in a scanning electron microscope (model: JS/YQ SEM-101) for scanning at a the magnification of 400 times, 5 to 8 samples are randomly sampled, and a 500 µm * 500 µm region is taken from each sample; (2) the pore diameter in the 1st to Nth (N is 5 to 8) regions is measured, and the average pore diameter Dₙ (n is 1 to N) of each region is calculated; (3) the average value D of D₁ to D_{N} is calculated, and the standard deviation σ of the above group of average value data is calculated as σ = sqrt(((D₁ - D)²+ (D₂ - D)² +...... + (Dₙ - D)²)/N), where n is 1 to N; and (4) when the standard deviation σ is less than 1.5 µm, the average value is valid, that is, D is the average pore diameter on the side of the partition wall. The average pore diameter on the inlet side and the outlet side was obtained. The results are shown in Table 2 below.

Thermal conductivity test method of the honeycomb ceramic carriers obtained in each of the above examples and comparative examples: The thermal conductivity of the above honeycomb ceramic carriers of the invention was tested using an LFA 467 laser thermal conductivity meter at a temperature range of 25°C to 500°C and a heating range of 50 K/min and is listed in Table 2 below.

It is worth mentioning that the "average pore diameter at gas inlet end Di" in Table 2 refers to the "average pore diameter of the openings of the pores on the gas inlet side", the "average pore diameter at gas outlet end Do" in Table 2 refers to the "average pore diameter of the openings of the pores on the gas outlet side", and the "pore diameter difference between gas outlet end and gas inlet end" in Table 2 refers to the "difference between the average pore diameter of the openings of the pores on the gas inlet side and the average pore diameter of the openings of the pores on the gas outlet side".

**Table 2 Performance parameters of honeycomb ceramic carrier obtained in each of examples and comparative examples**

| | Cell density | Wall thickness | Porosity | Thermal conductivity | Average pore diameter at gas inlet end Di (µm) | Average pore diameter at gas outlet end Do (µm) | Pore diameter difference between gas outlet end and gas inlet end (µm) |
|---|---|---|---|---|---|---|---|
| | E (cpsi) | T (mil) | (%) | (W/m•K) | | | |
| Example 1 | 300 | 3 | 38.46% | 19.82 | 13.17 | 16.27 | 3.22 |
| Example 2 | 300 | 6 | 39.55% | 18.99 | 13.51 | 16.71 | 4.37 |
| Example 3 | 300 | 8 | 38.02% | 19.96 | 13.23 | 16.43 | 5.2 |
| Example 4 | 400 | 3 | 38.91% | 19.72 | 12.84 | 15.96 | 3.53 |
| Example 5 | 400 | 6 | 39.06% | 19.56 | 12.47 | 15.65 | 4.59 |
| Example 6 | 400 | 8 | 39.45% | 19.09 | 13.11 | 16.32 | 5.81 |
| Example 7 | 500 | 3 | 38.16% | 19.31 | 12.63 | 15.81 | 3.76 |
| Example 8 | 500 | 6 | 39.11% | 18.91 | 13.08 | 16.22 | 4.97 |
| Example 9 | 500 | 8 | 39.98% | 18.01 | 13.76 | 16.92 | 6.11 |
| Example 10 | 300 | 6 | 35.23% | 21.23 | 12.03 | 15.26 | 3.97 |
| Example 11 | 300 | 6 | 52.3% | 14.83 | 18.87 | 22.03 | 5.35 |
| Example 12 | 400 | 6 | 36.01% | 20.21 | 12.69 | 15.93 | 4.26 |
| Example 13 | 400 | 6 | 53.89% | 14.32 | 19.36 | 22.62 | 5.56 |
| Example 14 | 500 | 6 | 35.11% | 21.03 | 19.22 | 22.46 | 4.63 |
| Example 15 | 500 | 6 | 54.01% | 13.81 | 19.56 | 22.68 | 5.92 |
| Example 16 | 200 | 6 | 38.33% | 18.66 | 13.16 | 16.34 | 3.18 |
| Example 17 | 300 | 12 | 39.01% | 17.17 | 13.45 | 16.67 | 2.71 |
| Example 18 | 400 | 6 | 22.11% | 24.11 | 9.21 | 12.42 | 2.58 |
| Example 19 | 400 | 6 | 60.12% | 10.02 | 24.31 | 27.53 | 5.90 |
| Comparative Example 1 | 600 | 3 | 38.21% | 19.11 | 13.20 | 16.43 | 6.33 |
| Comparative Example 2 | 300 | 3 | 39.51% | 18.51 | 16.42 | 16.44 | 0.02 |
| Comparative Example 3 | 400 | 6 | 40.19% | 18.71 | 15.64 | 15.63 | -0.01 |

The carriers prepared in Examples 1 to 19 were coated with catalysts and subjected to back pressure amplification tests. PN23 test method for the carriers coated with DOC and DPF catalysts: The data of PN > 23nm was measured using the World Harmonized Transient Cycle (WHTC). The test results are shown in Table 3.

The conversion rates of NO, CO and HC were measured, and the regeneration equilibrium temperature point and the light-off temperature were tested. The test results are shown in Table 3.

Coated catalyst: The DOC oxidation catalyst and the DPF oxidation catalyst are catalyst slurries containing precious metals, and the slurry coating contains aluminum oxide and/or oxides composed of rare earth elements.

The DPF oxidation catalyst is coated on the wall surface of the gas inlet pore. The precious metals in the slurry coating include Pt and Pd. The mass ratio of Pt to Pd is 1:0 to 5:1, and the concentration of the precious metals is 10 g/ft³ to 20 g/ft³.

The DOC oxidation catalyst is coated inside the filter wall of the particle filter from the gas outlet end. The precious metals in the catalyst inside the filter wall include Pt and Pd. The mass ratio of Pt to Pd is 5:1 to 0:1, and the concentration of the precious metals is 10 g/ft³ to 20 g/ft3.

**Table 3 Catalytic performance of honeycomb ceramic carrier obtained in each of examples and comparative examples**

| | PN value (×10¹⁰) | NO conversion rate at 350°C (%) | CO conversion rate at 350°C (%) | HC conversion rate at 350°C (%) | Regeneration equilibrium temperature point (°C) | Active regeneration light-off temperature (°C) |
|---|---|---|---|---|---|---|
| Example 1 | 5.5 | 46 | 100 | 88 | 315 | 250 |
| Example 2 | 4.4 | 44 | 100 | 87 | 325 | 260 |
| Example 3 | 3.7 | 43 | 100 | 86 | 330 | 270 |
| Example 4 | 5.2 | 48 | 100 | 89 | 300 | 240 |
| Example 5 | 4.5 | 47 | 100 | 88 | 310 | 250 |
| Example 6 | 3.2 | 45 | 100 | 86 | 320 | 260 |
| Example 7 | 5.2 | 50 | 100 | 91 | 290 | 240 |
| Example 8 | 4.1 | 49 | 100 | 89 | 300 | 240 |
| Example 9 | 3.0 | 48 | 100 | 88 | 310 | 240 |
| Example 10 | 5.1 | 43 | 100 | 86 | 310 | 270 |
| Example 11 | 6.7 | 49 | 100 | 89 | 323 | 390 |
| Example 12 | 4.2 | 46 | 100 | 88 | 305 | 250 |
| Example 13 | 5.7 | 50 | 100 | 90 | 317 | 280 |
| Example 14 | 4.7 | 48 | 100 | 89 | 300 | 240 |
| Example 15 | 5.3 | 51 | 100 | 91 | 320 | 270 |
| Example 16 | 8.5 | 44 | 100 | 80 | 350 | 300 |
| Example 17 | 5.2 | 38 | 100 | 73 | 370 | 320 |
| Example 18 | 5.5 | 40 | 100 | 69 | 310 | 300 |
| Example 19 | 8.2 | 50 | 100 | 80 | 370 | 350 |
| Comparative Example 1 | 8.1 | 52 | 100 | 86 | 305 | 250 |
| Comparative Example 2 | 9.3 | 43 | 100 | 85 | 320 | 260 |
| Comparative Example 3 | 8.1 | 45 | 100 | 84 | 335 | 265 |

As can be seen from Table 3 above, in Examples 1-19 of the present invention, where "Do (pore diameter of partition wall on outlet side) - Di (pore diameter of partition wall on inlet side)" satisfies being greater than 3 µm, then the filter according to the present invention satisfies high capture efficiency, can load the DOC oxidation catalyst and the DPF oxidation catalyst at the same time, and after loading, has got a high conversion rate for NOx, CO, and HC.

Specifically, the mesh number of Comparative Example 1 is relatively high, and its NOx and HC conversion rates are similar to those of the examples but its high mesh number greatly increases the amount of catalyst coating, which is disadvantageous for cost saving. Compared with the examples, Comparative Examples 2 and 3 do not comprise the process of using negative pressure to extract air from the outlet side of the unit body, and thus the oxidation effect is not significant. This leads to the effect that for pores on the inlet side, less oxidation sintering with the same duration of processing, larger pore diameter, higher PN value measured through WHTC cycle, and slightly lower NOx and HC conversion rates are given. In Examples 16 and 1, the reduction in mesh number leads to the increase or rise of the active regeneration conversion temperature and the regeneration equilibrium temperature point, which is disadvantageous for energy consumption. Compared with Example 1, Example 17 has a thicker wall thickness, which is disadvantageous for reducing the back pressure, and the thicker wall thickness will make its heat conduction slower, thereby increasing the active regeneration conversion temperature and the regeneration equilibrium temperature point thereof. The low porosity of Example 18 will also lead to a higher back pressure; the high porosity of Example 19 makes the structure of the honeycomb ceramic unstable and the compressive strength low; also, the increased porosity reduces the thermal conductivity of the honeycomb ceramic carrier, thereby increasing the active regeneration conversion temperature and regeneration equilibrium temperature point after the carrier is coated with a catalyst.

Therefore, the filter prepared according to the present invention, by improving the oxidation sintering means and the inlet/outlet diameter difference in the preparation process, has got both the DOC oxidation catalyst and the DPF oxidation catalyst, which can effectively improve the filtration efficiency and emission conversion efficiency, and reduce the catalyst coating pressure increases, thereby reducing automobile energy consumption.

Only specific implementations of the present invention are described above, but the scope of protection of the present invention is not limited thereto. Any skilled person familiar with the technical field can easily conceive of various changes or replacements within the technical scope disclosed in the present invention, all of which shall be covered within the scope of protection of the present invention. Therefore, the scope of protection of the present invention shall be determined by the scope of protection of the claims. In addition, specific examples are used in the specification to illustrate the principles and embodiments of the present invention. The description of the above examples is only used to help understand the method of the present invention and its core idea. The content of this specification should not be understood as a limitation on the present invention.

## Claims

1. A ceramic unit body, **characterized in that** two ends of the ceramic unit body in a longitudinal direction define a gas inlet end (01) and a gas outlet end (02), respectively, and the ceramic unit body has a plurality of compartments separated by partition walls and extending in the longitudinal direction of the ceramic unit body;
wherein the compartments comprise first compartments (11) and second compartments (12) alternately arranged in a cross section of the ceramic unit body, the first compartments (11) being open on a gas inlet end (01) side and blocked on a gas outlet end (02) side, and the second compartments (12) being blocked on a gas inlet end (01) side and open on a gas outlet end (02) side; and
wherein the partition walls are provided with a plurality of pores connecting the first compartments and the second compartments; an average pore diameter of openings of the pores on a first compartment (11) side is Di, an average pore diameter of openings of the pores on a second compartment (12) side is Do, and Di<Do.

2. The ceramic unit body according to claim 1, **characterized in that** in at least one of the pores, the number of openings on the first compartment (11) side is at least two, and at least one of the openings on the first compartment (11) side has a pore diameter less than that of the opening of the pore on the second compartment (12) side;
and/or, in at least one of the pores, the number of openings on the second compartment (12) side is at least two, and at least one of the openings on the second compartment (12) side has a pore diameter greater than that of the opening of the pore on the first compartment (11) side.

3. The ceramic unit body according to claim 1 or 2, **characterized in that** the average pore diameter Di of the pores on the first compartment (11) side is in a range of [8, 20] micrometers, preferably [12, 20] micrometers;
and/or, the average pore diameter Do of the pores on the second compartment (12) side is in a range of [11, 23] micrometers, preferably [15, 23] micrometers.

4. The ceramic unit body according to any one of claims 1 to 3, **characterized in that** both the first compartments (11) and the second compartments (12) have a square or rectangular cross section;
and/or, the first compartments (11) and the second compartments (12) are arranged alternately in a checkerboard pattern in the cross section of the ceramic unit body.

5. The ceramic unit body according to any one of claims 1 to 4, **characterized in that** the partition walls have a thickness of 75 to 250 µm, preferably 125 to 200 µm;
and/or, the first compartments (11) have a cross-sectional area greater than that of the second compartments (12), or the first compartments (11) have a cross-sectional area less than that of the second compartments (12), or the first compartments (11) have a cross-sectional area equal to that of the second compartments (12).

6. The ceramic unit body according to any one of claims 1 to 5, **characterized in that** the ceramic unit body has a porosity of 35% to 55%;
and/or, the compartments in the ceramic unit body exhibit a cell density of 200 to 500 mesh.

7. A method for preparing the ceramic unit body according to any one of claims 1 to 6, **characterized in that** the method comprises the following steps:
A1, dry-mixing silicon carbide powder, silicon powder, alkaline earth metal carbonate, metal oxide powder, an additive, a binder and a pore-forming agent to obtain a dry mixture;
A2, wet-mixing the dry mixture obtained in step A1 with water and a lubricant to obtain a wet mixture; and
A3, kneading, pugging, extruding, drying, plugging, debinding, and sintering the wet mixture obtained in step A2 to obtain the ceramic unit body;
wherein the sintering in the step A3 comprises oxygen-free sintering and oxidation sintering performed sequentially, and the oxidation sintering process is as follows: exposing a gas inlet end (01) of a green body that has completed oxygen-free sintering to air, and performing negative pressure extraction on a gas outlet end (02) of the green body, allowing the air, from the gas inlet end (01) of the green body, to sequentially pass through the first compartments (11), the pores, the second compartments (12) and then leave the green body from the gas outlet end (02), so as to form the pores in such a way that the average pore diameter Do of the openings of the pores on the second compartment (12) side is greater than the average pore diameter Di of the opening of the pores on the first compartment (11) side;
preferably, the dry mixing is performed using a plowshare high-speed mixer, with a dry mixing duration of 10 to 30 min, and a dry mixing speed of 50 to 200 rpm;
preferably, a wet mixing duration is 1 to 20 min, and a wet mixing speed is 50 to 200 rpm; and
preferably, the kneading is performed using a biaxial kneading machine, with a kneading duration of 30 to 180 min.

8. The method according to claim 7, **characterized in that** in the step A3, a negative pressure used in the negative pressure extraction is (-0.05) to (-0.02) MPa.

9. The method according to claim 7 or 8, **characterized in that** in the step A1, the silicon carbide powder comprises first silicon carbide powder with an average particle size of 20 to 30 µm and second silicon carbide powder with an average particle size of 3 to 8 µm.

10. The method according to any one of claims 7 to 9, **characterized in that** in the step A1, based on a total amount of the silicon carbide powder being 100 wt.%, the first silicon carbide powder accounts for 70 wt.% to 95 wt.% of the total silicon carbide powder, and the second silicon carbide powder accounts for 5 wt.% to 30 wt.% of the total silicon carbide powder.

11. The method according to any one of claims 7 to 10, **characterized in that** in the step A1, based on a total mass of raw materials being 100 wt.%, the silicon carbide powder accounts for 50 wt.% to 75 wt.%, preferably 50 wt.% to 65 wt.%, the silicon powder accounts for 15 wt.% to 25 wt.%, preferably 15 wt.% to 20 wt.%, the alkaline earth metal carbonate accounts for 1 wt.% to 2 wt.%, the metal oxide powder accounts for 0.2 wt.% to 1 wt.%, the additive accounts for 0.5 wt.% to 1.5 wt.%, the binder accounts for 6 wt.% to 15 wt.%, the pore-forming agent accounts for 3 wt.% to 18 wt.%, and the lubricant accounts for 5 wt.% to 11 wt.%.

12. The method according to any one of claims 7 to 11, **characterized in that** an average particle size of the silicon powder is 3 to 10 µm, an average particle size of the alkaline earth metal carbonate is 2 to 6 µm, an average particle size of the metal oxide is 3 to 8 µm, and an average particle size of the pore-forming agent is 8 to 40 µm.

13. The method according to any one of claims 7 to 12, **characterized in that** the method has one or more of the following features:
the alkaline earth metal carbonate is selected from at least one of magnesium carbonate, strontium carbonate, barium carbonate and calcium carbonate;
the metal oxide is selected from at least one of aluminum oxide and titanium oxide;
the additive is selected from at least one of bentonite and kaolin;
the binder is selected from at least one of organic alcohols, potassium laurate, modified cellulose, polyethylene oxide, and polyvinyl pyrrolidone;
the pore-forming agent is selected from at least one of walnut powder, graphite, benzoic acid, starch, ammonium bicarbonate, ammonium chloride, polymethyl methacrylate, and expanded microspheres; and
the lubricant is glycerin.

14. A honeycomb ceramic carrier, **characterized in that** the honeycomb ceramic carrier is composed of the ceramic unit bodies according to any one of claims 1 to 6 or ceramic unit bodies prepared by the method according to any one of claims 7 to 13, the ceramic unit bodies are distributed and connected in a cross section of the honeycomb ceramic carrier, and the ceramic unit bodies have the same longitudinal direction as the honeycomb ceramic carrier.

15. The honeycomb ceramic carrier according to claim 14, **characterized in that** the honeycomb ceramic carrier has a thermal conductivity of 5 to 30 W/m•K, preferably 10 to 30 W/m•K, and more preferably 13 to 25 W/m•K.

16. The honeycomb ceramic carrier according to claim 14 or 15, **characterized in that** the honeycomb ceramic carrier is a cylinder or a polygonal prism.

17. A method for preparing the honeycomb ceramic carrier according to any one of claims 14 to 16, **characterized in that** the method comprises the following steps:
B1, providing the ceramic unit bodies according to any one of claims 1 to 6, or providing ceramic unit bodies prepared by the method according to any one of claims 7 to 13; and
B2, the ceramic unit bodies being sequentially subjected to splicing, surface grinding, and end-face reinforcement treatments to obtain the honeycomb ceramic carrier.

18. An exhaust catalytic substrate core, **characterized in that** the exhaust catalytic substrate core comprises:
the honeycomb ceramic carrier according to any one of claims 14 to 16, or a honeycomb ceramic carrier prepared by the method according to claims 17;
a first catalyst applied to inner wall surfaces of first compartments (11) of the honeycomb ceramic carrier; and
a second catalyst applied to inner wall surfaces of second compartments (12) of the honeycomb ceramic carrier.

19. The exhaust catalytic substrate core according to claim 18, **characterized in that** the exhaust catalytic substrate core is configured for catalytically treating exhaust gas containing soot particles, wherein the first catalyst is used to promote oxidation of the soot particles, and the second catalyst is used to catalyze conversion of carbon monoxide, hydrocarbons and nitrogen oxides.
